(19) 

Europäisches
Patentamt
European
Patent Office
Office européen
des brevets

(11) **EP 3 554 040 A1**

(12) **EUROPEAN PATENT APPLICATION**

(43) Date of publication:
**16.10.2019 Bulletin 2019/42**

(51) Int Cl.:
***H04L 29/06*** *(2006.01)*

(21) Application number: **18182822.9**

(22) Date of filing: **11.07.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.04.2018 CN 201810317390**

(71) Applicant: **Beijing Baidu Netcom
Science And Technology Co., Ltd.
Beijing 100085 (CN)**

(72) Inventors:
 • HUANG, Jizhou
  Beijing, 100085 (CN)
 • DING, Shiqiang
  Beijing, 100085 (CN)
 • WANG, Haifeng
  Beijing, 100085 (CN)

(74) Representative: **Lucke, Andreas
 Boehmert & Boehmert
 Anwaltspartnerschaft mbB
 Pettenkoferstrasse 22
 80336 München (DE)**

(54) **METHOD AND APPARATUS FOR RECOMMENDING ENTITY**

(57) Embodiments of the present disclosure disclose a method and apparatus for recommending entity. A method for recommending entity includes: acquiring a candidate entity set associated with a to-be-searched entity, in response to receiving a user's search request for an entity; inputting the candidate entity set into a pre-trained ranking model to obtain a candidate entity sequence; and selecting a candidate entity from the candidate entity sequence and recommending the selected candidate entity to the user. The ranking model ranks the candidate entity set based on at least one of: a degree of correlation between each candidate entity in the candidate entity set and the to-be-searched entity; a degree of interest of the user in the each candidate entity in the candidate entity set; and a degree of expectation of the user for the each candidate entity in the candidate entity set. This embodiment achieves a more relevant, individualized, surprising, and diversified entity recommendation for the user and/or the to-be-searched entity.

*200*

acquiring a candidate entity set associated with a to-be-searched entity, in response to receiving a user's search request for the entity — 210

inputting the candidate entity set into a pre-trained ranking model to obtain a candidate entity sequence — 220

selecting a candidate entity from the candidate entity sequence and recommending the selected candidate entity to the user — 230

Fig. 2

**Description**

CROSS-REFERENCE TO RELATED APPLICATIONS

This application is related to and claims priority from Chinese patent application no. 201810317390.3, filed with the State Intellectual Property Office of the People's Republic of China (SIPO) on April 10, 2018, the entire disclosure of the Chinese application is hereby incorporated by reference.

TECHNICAL FIELD

Embodiments of the present disclosure relate to the field of the Internet, specifically relate to the search field, and more specifically relate to a method and apparatus for recommending entity.

BACKGROUND

Entity recommendation is defined as a series of operations to provide entity suggestions to users, and to help the users to discover information they are interested in.

In the prior art, entity recommendation is usually performed by using a collaborative filtering approach. The collaborative filtering algorithm discovers the user's preferences by mines the user's historical behavior data, divides users based on different preferences, finds (interested) users similar to the specified user in the user group, summarizes comments on certain information by these similar users, and forms a system's preference prediction for the specified user for this information.

SUMMARY

Embodiments of the present disclosure provides a method and apparatus for recommending entity.

In a first aspect, the embodiments of the present disclosure provides a method for recommending entity, including: acquiring a candidate entity set associated with a to-be-searched entity, in response to receiving a user's search request for an entity; inputting the candidate entity set into a pre-trained ranking model to obtain a candidate entity sequence; and selecting a candidate entity from the candidate entity sequence and recommending the selected candidate entity to the user. The ranking model ranks the candidate entity set based on at least one of: a degree of correlation between each candidate entity in the candidate entity set and the to-be-searched entity; a degree of interest of the user in the each candidate entity in the candidate entity set; and a degree of expectation of the user for the each candidate entity in the candidate entity set.

In some embodiments, the acquiring a candidate entity set associated with a to-be-searched entity further includes: adding a candidate entity to the candidate entity set, in response to an existence of an association between the candidate entity and the to-be-searched entity in a preset knowledge graph.

In some embodiments, the acquiring a candidate entity set associated with a to-be-searched entity further includes: adding a candidate entity to the candidate entity set, in response to a number of co-occurrences of the candidate entity and the to-be-searched entity in a search session history exceeding a preset first threshold.

In some embodiments, the acquiring a candidate entity set associated with a to-be-searched entity further includes: determining an entity having a co-occurrence relationship with the to-be-searched entity in a preset corpus as a co-occurrence candidate entity; and adding a co-occurrence candidate entity having a degree of correlation with the to-be-searched entity exceeding a preset second threshold to the candidate entity set.

In some embodiments, the ranking model is obtained by training through the following steps: generating a training sample set, each training sample in the training sample set including a triplet and a click behavior tag, the triplet including a user identification, a first entity, and a second entity, and the click behavior tag being used to indicate whether the user clicked on the second entity in a search result obtained by searching the first entity; generating a feature vector of a training sample, for each training sample in the generated training sample set; inputting the training sample set and the generated feature vector into a pre-established gradient boosting decision tree model, and training the gradient boosting decision tree model based on a stochastic gradient descent algorithm; and generating the ranking model, in response to a minimum cross-entropy loss function. The feature vector includes a feature value for indicating at least one of: a degree of correlation between the first entity and the second entity in the triplet; a degree of interest of the user of the triplet in the second entity in the triplet; and a degree of expectation of the user of the triplet for the second entity in the triplet.

In some embodiments, a component for indicating the degree of correlation between the first entity and the second entity in the triplet includes at least one of: a degree of correlation of the first entity and the second entity in the triplet in a preset knowledge graph; a degree of co-occurrence of the first entity and the second entity in the triplet in a search session history; a degree of co-occurrence of the first entity and the second entity in the triplet in a preset corpus; and a subject similarity between the first entity and the second entity in the triplet.

In some embodiments, the feature value for indicating the degree of interest of the user of the triplet in the second entity in the triplet includes at least one of: a click rate of the second entity in the triplet; a click rate of a subject category to which the second entity belongs in a preset classification table; and a semantic similarity between the first entity and the second entity in the triplet.

In some embodiments, the feature value for indicating the degree of expectation of the user of the triplet for the second entity in the triplet includes at least one of: a familiarity of relationship of the user and/or the first entity to the second entity determined based on historical click data of the user in the triplet; a degree of surprise of the second entity relative to the user and/or the first entity in the triplet; and a click diversity of the first entity in the triplet.

In a second aspect, the embodiments of the present disclosure provides an apparatus for recommending entity, including: an acquisition unit, configured to acquire a candidate entity set associated with a to-be-searched entity, in response to receiving a user's search request for an entity; a rank unit, configured to input the candidate entity set into a pre-trained ranking model to obtain a candidate entity sequence; and a recommendation unit, configured to select a candidate entity from the candidate entity sequence and recommend the selected candidate entity to the user. The ranldng model ranks the candidate entity set based on at least one of: a degree of correlation between each candidate entity in the candidate entity set and the to-be-searched entity; a degree of interest of the user in the each candidate entity in the candidate entity set; and a degree of expectation of the user for the each candidate entity in the candidate entity set.

In some embodiments, when acquiring a candidate entity set associated with a to-be-searched entity, the acquisition unit is further configured to: add a candidate entity to the candidate entity set, in response to an existence of an association between the candidate entity and the to-be-searched entity in a preset knowledge graph.

In some embodiments, when acquiring a candidate entity set associated with a to-be-searched entity, the acquisition unit is further configured to: add a candidate entity to the candidate entity set, in response to a number of co-occurrences of the candidate entity and the to-be-searched entity in a search session history exceeding a preset first threshold.

In some embodiments, when acquiring a candidate entity set associated with a to-be-searched entity, the acquisition unit is further configured to: determine an entity having a co-occurrence relationship with the to-be-searched entity in a preset corpus as a co-occurrence candidate entity; and add a co-occurrence candidate entity having a degree of correlation with the to-be-searched entity exceeding a preset second threshold to the candidate entity set.

In some embodiments, the apparatus further includes a training unit, wherein the training unit is configured to train the ranking model. The training unit includes: a training sample generation module, configured to generate a training sample set, each training sample in the training sample set including a triplet and a click behavior tag, the triplet including a user identification, a first entity, and a second entity, and the click behavior tag being used to indicate whether the user clicked on the second entity in a search result obtained by searching the first entity; a feature vector generation module, configured to generate a feature vector of a training sample, for each training sample in the generated training sample set; an iteration training module, configured to input the training sample set and the generated feature vector into a pre-established gradient boosting decision tree model, and train the gradient boosting decision tree model based on a stochastic gradient descent algorithm; and a generation unit, configured to generate the ranking model, in response to a minimum cross-entropy loss function. The feature vector includes a feature value for indicating at least one of: a degree of correlation between the first entity and the second entity in the triplet; a degree of interest of the user of the triplet in the second entity in the triplet; and a degree of expectation of the user of the triplet for the second entity in the triplet.

In some embodiments, a component for indicating the degree of correlation between the first entity and the second entity in the triplet includes at least one of: a degree of correlation of the first entity and the second entity in the triplet in a preset knowledge graph; a degree of co-occurrence of the first entity and the second entity in the triplet in a search session history; a degree of co-occurrence of the first entity and the second entity in the triplet in a preset corpus; and a subject similarity between the first entity and the second entity in the triplet.

In some embodiments, the feature value for indicating the degree of interest of the user of the triplet in the second entity in the triplet includes at least one of: a click rate of the second entity in the triplet; a click rate of a subject category to which the second entity belongs in a preset classification table; and a semantic similarity between the first entity and the second entity in the triplet.

In some embodiments, the feature value for indicating the degree of expectation of the user of the triplet for the second entity in the triplet includes at least one of: a familiarity of relationship of the user and/or the first entity to the second entity determined based on historical click data of the user in the triplet; a degree of surprise of the second entity relative to the user and/or the first entity in the triplet; and a click diversity of the first entity in the triplet.

In a third aspect, the embodiments of the present disclosure further provides a device, including: one or more processors; and a storage apparatus, to store one or more programs, and when the one or more programs being executed by the one or more processors, cause the one or more processors to execute the method as provided in the first aspect.

In a fourth aspect, the embodiments of the present disclosure further provides a non-transitory computer-readable storage medium, storing a computer program thereon, the computer program, when executed by a processor, executes the method as provided in the first aspect.

The method and apparatus for recommending entity provided by the embodiments of the present disclosure acquire a candidate entity set associated with a to-be-searched entity in a preset entity set, in response to receiving a user's search request for an entity; then input the candidate entity set into a pre-trained ranking model to obtain a candidate entity sequence; and finally select a candidate entity from the candidate entity sequence and recommend the selected candidate entity to the user. In addition, since the ranking model ranks the candidate entity set based on at least one of the degree of correlation between each candidate entity in the candidate entity set and the to-be-searched entity, the degree of interest of the user in the each candidate entity in the candidate entity set, and the degree of expectation of the user for the each candidate entity in the candidate entity set, a more relevant, individualized, surprising, and diversified entity recommendation for the user and/or the to-be-searched entity is achieved.

In addition, in the method and apparatus for recommending entity of some of the embodiments of the present disclosure, since the candidate entity set includes the entity that has an association with the to-be-searched entity in the preset knowledge graph, the entity that has a number of co-occurrences with the to-be-searched entity in the search session history exceeding the preset first threshold and the entity that has the degree of correlation with the to-be-searched entity in the preset corpus exceeding the preset degree of correlation threshold, and the entities that are included in the candidate entity set are considered from three aspects of the degree of interest and the degree of expectation of the user, and the degree of correlation between the entities, it achieves the correlation between the various elements in the candidate entity set and the search request in different dimensions.

BRIEF DESCRIPTION OF THE DRAWINGS

After reading detailed descriptions of non-limiting embodiments with reference to the following accompanying drawings, other features, objectives and advantages of the present disclosure will be more apparent:

Fig. 1 is an exemplary system architecture diagram in which the present disclosure may be applied;

Fig. 2 is a flowchart of an embodiment of a method for recommending entity according to the present disclosure;

Fig. 3 is a schematic diagram of a knowledge graph;

Fig. 4 is a schematic diagram of an application scenario of the method for recommending entity according to the present disclosure;

Fig. 5 is a flowchart of another embodiment of the method for recommending entity according to the present disclosure;

Fig. 6 is a structural diagram of an embodiment of an apparatus for recommending entity according to the present disclosure; and

Fig. 7 is a schematic structural diagram of a computer system adapted to execute a server of embodiments of the present disclosure.

DETAILED DESCRIPTION OF EMBODIMENTS

The present application will be further described below in detail in combination with the accompanying drawings and the embodiments. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that the embodiments in the present application and the features in the embodiments may be combined with each other on a non-conflict basis. The present application will be described below in detail with reference to the accompanying drawings and in combination with the embodiments.

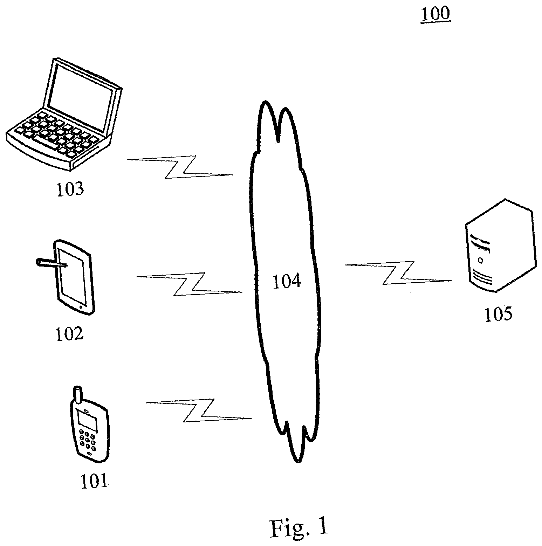

Fig. 1 shows an illustrative architecture of a system 100 which may be used by a method for recommending entity or an apparatus for recommending entity according to the embodiments of the present application.

As shown in FIG. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, such as wired or wireless transmission links, or optical fibers.

The terminal devices 101, 102, 103 may be hardware or software. When the terminal devices 101, 102, 103 are hardware, they may be various electronic devices having displays and supporting search services, including but not limited to, smart phones, tablet computers, e-book readers, laptop portable computers, and desktop computers, etc. When the terminal devices 101, 102, 103 are software, they may be installed in the electronic devices listed above. The terminal devices may be executed as multiple software or software modules (e.g., multiple software or software modules used to provide distributed services), or as a single software or software module. The present disclosure does not impose any specific limitations thereof.

The server 105 may be a server that provides various services, such as a backend processing server that provides support for a search request sent by a user using the terminal devices 101, 102, 103. The backend processing server may perform analysis and other processing on the received data such as the search request, and feed back the processing result (for example, a search engine results page containing entity recommendation content) to the terminal device.

It needs to be noted that the method for recommending entity provided by the embodiments of the present disclosure is generally executed by the server 105. Accordingly, the apparatus for recommending entity is generally provided in the server 105.

It should be understood that the numbers of the terminal devices 101, 102, 103, the network 104 and the server 105 in Fig. 1 are merely illustrative. Any number of terminal devices, networks and servers may be provided based on the actual requirements.

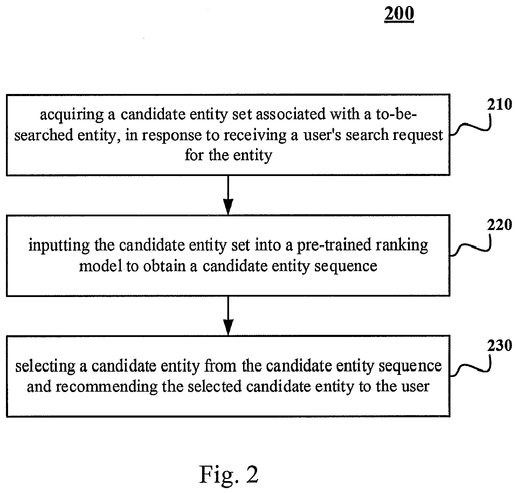

With further reference to Fig. 2, a flow 200 of an embodiment of the method for recommending entity according to the present disclosure is shown. The method for recommending entity includes the following steps:

Step 210, acquiring a candidate entity set associated with a to-be-searched entity, in response to receiving a user's search request for an entity.

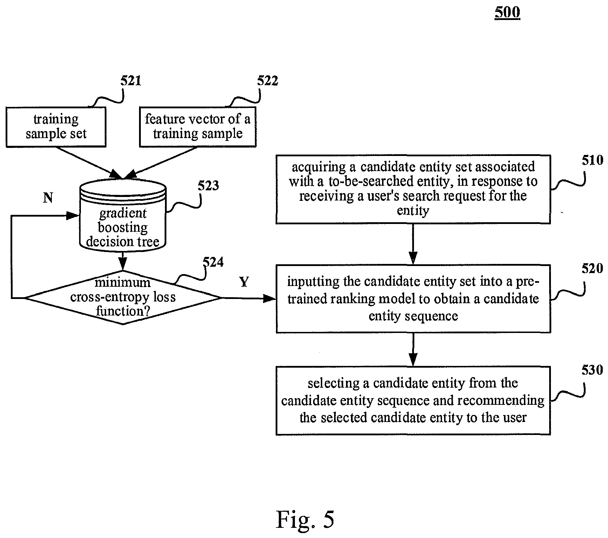

In the present embodiment, the executive body of the method for recommending entity (e.g., the server 105 shown in Fig. 5) may acquire a candidate entity set associated with a to-be-searched entity, in response to receiving a user's search request for an entity.

Here, the user may use any electronic device (for example, the terminal devices 101, 102, and 103 shown in Fig. 1) capable of communicating with the executive body of the method for recommending entity in this embodiment via wired or wireless communication to send a search request to the executive body.

In addition, in the present embodiment, candidate entities in the candidate entity set may be entities having any feasible association with the to-be-searched entity. Here, the association may be a direct association between two entities (for example, an association in a knowledge graph), and/or an indirect association established between two entities by a search session history or a preset corpus. For example, two entities that have been searched in succession by the same user in a short period of time maybe candidate entities for each other. In the encyclopedia corpus, two entities that appear in the same article may also be candidate entities for each other. Taking a search session history as an example, if a user A searches for the entity eq and the entity ec in succession in a short period of time in the searching process, then, when another user B searches for the entity eq, it may be considered that the entity ec is a candidate entity of the entity eq. Therefore, ec may be determined as an element in the candidate entity set in these application scenarios.

Step 220, inputting the candidate entity set into a pre-trained ranking model to obtain a candidate entity sequence.

In the present embodiment, the ranking model may rank the candidate entity set based on at least one of the following: a degree of correlation between each candidate entity in the candidate entity set and the to-be-searched entity; a degree of interest of the user in the each candidate entity in the candidate entity set; and a degree of expectation of the user for the each candidate entity in the candidate entity set.

Here, the degree of correlation between each candidate entity and the to-be-searched entity may be understood as the degree of association between the candidate entity and the to-be-searched entity. The degree of correlation between the candidate entity and the to-be-searched entity may be the degree of similarity between the two entities in the aspects of specific content, subject abstraction, and the like, and/or may also be the degree of correlation of some indicators such as the association or co-occurrence of the two entities in the aspects of knowledge graph, search session history, preset corpus and the like.

The degree of interest of the user in the each candidate entity in the candidate entity set may be understood as the degree that used to characterize how the user initiating the search request is interested in the candidate entity. The most direct method is to analyze the historical behavior data of the user who initiates the search request, and measure the user's interest in the candidate entity by counting the click rate (clicks/presentations) to the candidate entity. It may also be possible to indirectly measure the degree of interest of the user in the candidate entity by generalizing the user's behavior of whether click to the semantic similarity calculation through a neural network model.

The degree of expectation of the user for the each candidate entity in the candidate entity set may be understood as the degree that used to characterize how the user initiating the search request expects for a certain candidate entity appearing in the search result. Alternatively, it may be obtained based on the subject similarity between the historical behavior data of the user who initiates the search request and the candidate entity. For example, for a candidate entity that the user often clicks on, it will be considered that the user is more familiar with this entity and has higher expectation for the entity.

Here, the pre-trained ranking model may score the priority of each candidate entity in the candidate entity set inputted therein through a series of calculations, and obtain a candidate entity sequence based on the determined priority ranking.

For example, the pre-trained ranking model may be any ranking model in the LTR (Learning to Rank) framework. The LTR framework may train labeled training data and features extracted from it, for a specific optimization objective and through a specific optimization method, so that the obtained ranking model after training may score the priority of the inputted candidate entities, and may further perform ranking.

In some application scenarios, the priority determined by the ranking model may be a qualitative description of the candidate entities in the candidate entity set. In these application scenarios, the ranking model may divide the candidate entities in the candidate entity set according to a priority ranking, thereby obtaining the candidate entity sequence.

For example, if the ranking model ranks the candidate entities in the candidate entity set based on the degree of correlation between each candidate entity in the candidate entity set and the to-be-searched entity, the ranking model may analyze various historical behavior data of each user for each candidate entity, to classify each candidate entity in the candidate entity set into classes such as a strong correlation, a medium-strong correlation, a medium correlation, a medium-weak correlation, a weak correlation, and no correlation according to the degree of correlation between each candidate entity and the to-be-searched entity.

Similarly, if the ranking model ranks the candidate entities in the candidate entity set based on the degree of interest of the user in the each candidate entity in the candidate entity set, the ranking model may analyze various historical click data of the user who initiates the search request, to classify each candidate entity in the candidate entity set into classes such as high interest, medium-high interest, medium interest, medium-low interest, low interest, and no interest according to the degree of interest of the user who initiates the search request.

Similarly, if the ranking model ranks the candidate entities in the candidate entity set based on the degree of correlation between each candidate entity in the candidate entity set and the to-be-searched entity and the degree of interest of the user in the each candidate entity in the candidate entity set at the same time, the ranking model may first respectively determine the degree of correlation between each candidate entity in the candidate entity set and the to-be-searched entity and the degree of interest of the user who initiates the search request in the each candidate entity in the candidate entity set, and then rank the degree of interest of the user who initiates the search request. For example, if it is desired to pay more attention to the degree of interest of the user who initiates the search request in the candidate entity rather than the degree of correlation between the candidate entity and the to-be-searched entity, then the candidate entity sequence after ranking by the ranking model may be ranked according to the following rank order: high interest and strong correlation, high interest and medium-strong correlation, high interest and medium correlation, high interest and weak correlation, high interest and no correlation, high-medium interest and strong correlation, high-medium interest and medium-strong correlation, high-medium interest and medium correlation, high-medium interest and weak correlation, high-medium interest and no correlation, medium interest and strong correlation, medium interest and medium-strong correlation, medium interest and medium correlation, medium interest and weak correlation, medium interest and no correlation, medium-low interest and strong correlation, medium-low interest and medium-strong correlation, medium-low interest and medium correlation, medium-low interest and weak correlation, medium-low interest and no correlation, low interest and strong correlation, low interest and medium-strong correlation, low interest and medium correlation, low interest and weak correlation, low interest and no correlation, no interest and strong correlation, no interest and medium-strong correlation, no interest and medium correlation, no interest and weak correlation, and no interest and no correlation.

In some other application scenarios, the priority determined by the ranking model may be a quantitative description of the candidate entities in the candidate entity set. In these application scenarios, the ranking model may quantify and score each candidate entity in the candidate entity set according to a certain algorithm, thereby obtaining the candidate entity sequence.

In these application scenarios, if the ranking model ranks the candidate entities in the candidate entity set based on the degree of correlation between each candidate entity in the candidate entity set and the to-be-searched entity, the ranking model may operate on various historical click data of the user for each candidate entity based on a preset algorithm, to calculate the degree of correlation score of each candidate entity in the candidate entity set.

Similarly, if the ranking model ranks the candidate entities in the candidate entity set based on the degree of interest of the user in the each candidate entity in the candidate entity set, the ranking model may operate on various historical click data of the user who initiates the search request based on a preset algorithm, to calculate the degree of interest score of each candidate entity in the candidate entity set.

Similarly, if the ranking model ranks the candidate entities in the candidate entity set simultaneously based on the degree of correlation between each candidate entity in the candidate entity set and the to-be-searched entity and the degree of interest of the user in the each candidate entity in the candidate entity set, the ranking model may perform a weighted sum on the degree of correlation score and the degree of interest score based on a preset weight (or a weight obtained by training), and rank the candidate entities in the candidate entity set according to the scores after the weighted sum to obtain the candidate entity sequence.

Step 230, selecting a candidate entity from the candidate entity sequence and recommending the selected candidate entity to the user.

In this step, it is possible to select a candidate entity to recommend it to the user according to the priority of each candidate entity in the candidate entity sequence output by the ranking model in step 220.

For example, in some application scenarios, the priority of each candidate entity determined by the ranking model is characterized by a qualitative ranking. In these application scenarios, for example, the candidate entity with the highest priority in the candidate entity sequence may be recommended to the user.

Alternatively, in some other application scenarios, the priority of each candidate entity determined by the ranking model is characterized by a quantitative value (e.g., a score). In these application scenarios, for example, a candidate entity with a score exceeding a predetermined threshold in the candidate entity sequence may be selected and recommended to the user. Alternatively, in these application scenarios, it may also be possible to select N (N is a preset positive integer) candidate entities with the highest scores in the candidate entity sequence to recommend them to the user.

The method for recommending entity provided by the present embodiment acquires a candidate entity set associated with a to-be-searched entity in a preset entity set, in response to receiving a user's search request for an entity; then inputs the candidate entity set into a pre-trained ranking model to obtain a candidate entity sequence; and finally selects a candidate entity from the candidate entity sequence and recommends the selected candidate entity to the user. In addition, since the ranking model may rank based on at least one of the degree of correlation between each candidate entity in the candidate entity set and the to-be-searched entity, the degree of interest of the user in the each candidate entity in the candidate entity set, and the degree of expectation of the user for the each candidate entity in the candidate entity set, a more relevant, individualized, surprising, and diversified entity recommendation for the user is achieved.

In some alternative implementations, the acquiring a candidate entity set associated with a to-be-searched entity in step 210 of the present embodiment may be executed through the following approach:

Step 211, adding a candidate entity to the candidate entity set, in response to an existence of an association between the candidate entity and the to-be-searched entity in a preset knowledge graph.

A knowledge graph (KG) may be understood as a centralized repository for storing an association between an entity and another entity associated with it.

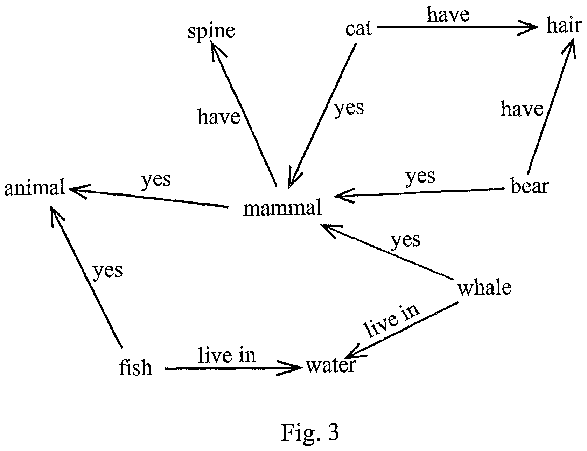

Referring to Fig. 3, a schematic diagram of a knowledge graph of the entity "mammal" is shown.

In the knowledge graph shown in Fig. 3, "mammal" is one kind of "animal," and there is a connection between them in the knowledge graph shown in Fig. 3 (for example, there is a connecting line between them), then, the entity "animal" may be determined as a candidate entity of "mammal."

In this way, when the user searches for the entity "mammal," the entities "animal," "cat," "whale," "bear," "spine," etc. appearing in the knowledge graph shown in Fig. 3 may be determined as elements in the candidate entity set, while the entities "water," "fish," "hair," etc. are not determined as elements in the candidate entity set. The candidate entity set generated by step 211 may be denoted as, for example, K(eq), wherein eq represents the to-be-searched entity.

In some other alternative implementations, the acquiring a candidate entity set associated with a to-be-searched entity in step 210 of the present embodiment may also be executed through the following approach:

Step 212, adding a candidate entity to the candidate entity set, in response to a number of co-occurrences of the candidate entity and the to-be-searched entity in a search session history exceeding a preset first threshold.

In computer terminology, session refers to the process of communication of an end user with an interactive system (e.g., a server). For example, a session starts when the terminal accesses the server, and lasts until when the server is closed, or when the client is closed.

In some application scenarios, entities having more co-occurrence times with the to-be-searched entity eq in the search session history may be extracted to form the candidate entity set, which is denoted as S(eq).

In some other alternative implementations, the acquiring a candidate entity set associated with a to-be-searched entity in step 210 of the present embodiment may also be executed through the following approach:

Step 213, determining an entity having a co-occurrence relationship with the to-be-searched entity in a preset corpus as a co-occurrence candidate entity.

Here, entities appearing in the same web document in the preset corpus with the to-be-searched entity may be selected from the preset corpus as co-occurrence candidate entities, and a set Dr(eq) is formed.

And, step 214, adding a candidate entity having a degree of correlation with the to-be-searched entity exceeding a preset second threshold to the candidate entity set.

In some application scenarios, the degree of co-occurrence of the co-occurrence candidate entity in the set Dr(eq) and the to-be-searched entity may be calculated by the following formula (1):

$$P(e_c \mid e_q, T, R) \approx P(e_c \mid e_q) gP\left(R \mid e_q, e_c\right) gP(T \mid e_c)$$

(1)

In the above formula (1), T represents the set of entity categories of the to-be-searched entity eq, R represents the relationship between eq and ec described in the network document, in the preset word set for describing the relationship between the entities, P(ec|eq) is the content-independent degree of co-occurrence, and P(R|eq,ec) is the content-related degree of co-occurrence.

P(ec|eq) and P(R|eq,ec) may be calculated by the following formula (2) and formula (3), respectively.

$$P\left(e_c \mid e_q\right) = \frac{PMI\left(e_q, e_c\right)}{\sum_{e_c' \in \mathscr{D}_r\left(e_q\right)} PMI'\left(e_q, e_c\right)}$$

(2)

$$P\left(R \mid e_c, e_q\right) = P\left(R \mid \theta_{qc}\right) = \prod_{t \partial R} P(t \mid \theta_{qc}^{n(t,R)})$$

(3)

Here, PMI(eq,ec) and PMI'(eq,ec) in the above formula (2) may be calculated by the following formula (4):

$$PMI\left(e_c, e_q\right) = \log \frac{cnt\left(e_c, e_q\right)}{cnt\left(e_c\right) g cnt\left(e_q\right)}$$

(4)

Here, cnt(ec,eq) is the number of co-occurrences of ec and eq in the preset corpus, and cnt(ec) and cnt(eq) are the numbers of occurrences of ec and eq in the preset corpus, respectively.

θqc in the above formula (3) is the relation score between eq and ec output by a preset co-occurrence language model, and n(t,R) is the number of occurrences of t in R.

In addition, P(T|ec) in the above formula (1) is a relationship filter and may be obtained by the following formula (5):

$$P(T \mid e_c) = \begin{cases} 1 & if\ cat'(T) \cap cat(e_c) \neq \varnothing \\ 0 & others \end{cases}$$

(5)

Here, cat(ec) is the mapping function that maps the entity ec to the category set of ec, and cat'(T) is a series of entity categories obtained by performing a category expansion operation on T.

In this way, by calculating the degree of co-occurrence of the co-occurrence candidate entities in the set Dr(eq) with the above formula (1), the co-occurrence candidate entities having the degree of co-occurrence exceeding the second preset threshold may be filtered out and the set D(eq) is formed.

It may be understood that when acquiring a candidate entity set associated with a to-be-searched entity in step 210 of the present embodiment, the candidate entity set K(eq), S(eq) or D(eq) may be obtained by using one of the above three alternative implementations. The candidate entity set may also be obtained by any combination of the above three alternative implementations. Specifically, if the candidate entity set is obtained by using the above step 211 and step 212, the candidate entity set ultimately generated may be K(eq) Us(eq). Similarly, if the candidate entity set is obtained by using the above step 211 and steps 213 to 214, the candidate entity set ultimately generated may be S(eq)UD(eq). Similarly, if the candidate entity set is obtained by using the above step 211, step 212, and steps 213 to 214, the candidate entity set ultimately generated may be K(eq)US(eq)UD(eq).

It may be understood that when the generated candidate entity set is K(eq)US(eq)UD(eq), since the candidate entity set includes not only the entity with an association with the to-be-searched entity in the preset knowledge graph (the candidate entity in K(eq)), the entity having the number of co-occurrences with the to-be-searched entity in a search session history exceeding the preset first threshold (the candidate entity in S(eq)), and the entity having the degree of correlation with the to-be-searched entity in the preset corpus exceeding the preset degree of correlation threshold (the candidate entity in D(eq)), the entities that are included in the candidate entity set are considered from three aspects of the user's degree of interest, degree of expectation, and degree of correlation between the entities. The correlation of each element in the candidate entity set and the search request in different dimensions is realized.

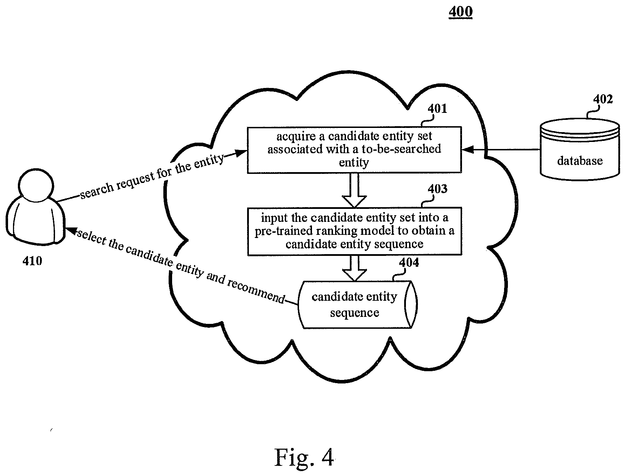

With reference to Fig. 4, a schematic diagram of an application scenario of the method for recommending entity of the present embodiment is shown.

In the application scenario shown in Fig. 4 , the user 410 may send a search request for an entity to a search server through a terminal device (not shown in the figure) used by the user. After receiving the search request, the search server may acquire a candidate entity set associated with the to-be-searched entity from the database 402, as indicated by the reference numeral 401. Then, as indicated by the reference numeral 403, the search server may input the acquired candidate entity set into a pre-trained ranking model, thereby ranking each candidate entity in the candidate entity set to obtain the candidate entity sequence 404. In this way, top N of the candidate entities in the candidate entity sequence 404 may be recommended to the user.

With reference to Fig. 5, a schematic flowchart of another embodiment of the method for recommending entity according to the present disclosure is shown.

The method of the present embodiment includes the following steps:

Step 510, acquiring a candidate entity set associated with a to-be-searched entity, in response to receiving a user's search request for an entity.

Step 510 of the present embodiment may have an execution approach similar to step 210 in the embodiment shown in Fig. 2. In addition, in step 510 of this embodiment, an alternative implementation of acquiring a candidate entity set associated with a to-be-searched entity may also be obtained by referring to the approaches of the above step 211, step 212, step 213 to step 214, or any combination of the three approaches, and detailed description thereof will be omitted.

Step 520, inputting the candidate entity set into a pre-trained ranking model to obtain a candidate entity sequence.

In the method for recommending entity of the present embodiment, the ranking model may be obtained by training through the following approach:

Step 521, generating a training sample set, each training sample in the training sample set including a triplet and a click behavior tag, the triplet including a user identification, a first entity, and a second entity, and the click behavior tag being used to indicate whether the user clicked on the second entity in a search result obtained by searching the first entity.

Illustratively, each triplet may be expressed as, for example, $(u^i, e_q^j, e_c^k)$. Here, $u^i$ may be understood as the identification of a user in a user collection, $e_q^j$ is a first entity (for example, an entity once searched by a user), and c is a second entity (for example, an entity presented on a search engine results page obtained by searching the first entity at a time.)

In addition, the value of the click behavior tag yijk may be determined by the following formula:

$$y_{ijk} = \begin{cases} 1 & if\ click(u^i, e_q^j, e_c^k) > 0 \\ 0 & others \end{cases}$$

$$(6)$$

In the above formula (6), $click(u^i, e_q^j, e_c^k)$ is used to indicate that the user $u^i$ has an aggregated click of the click behavior on the second entity $e_c^k$ in the search result obtained by searching the first entity $e_q^j$. If there is an aggregated click in the triplet $(u^i, e_q^j, e_c^k)$, then yijk=1 is marked for the triplet $(u^i, e_q^j, e_c^k)$, otherwise yijk=o is marked for the triplet $(u^i, e_q^j, e_c^k)$.

Step 522, generating a feature vector of a training sample, for each training sample in the generated training sample set.

Here, the feature vector includes a feature value for indicating at least one of the following: the degree of correlation between the first entity eq and the second entity ec in the triplet $(u,e_q,e_c)$; the degree of interest of the user u of the triplet in the second entity ec in the triplet $(u,e_q,e_c)$; and the degree of expectation of the user u of the triplet for the second entity ec in the triplet $(u,e_q,e_c)$.

Here, the degree of correlation between the first entity eq and the second entity ec may be understood as the degree of association between the candidate entity and the to-be-searched entity. The degree of correlation between the candidate entity and the to-be-searched entity may be the degree of similarity between the two entities in the aspects of specific content, subject abstraction, and the like, and/or may also be the degree of correlation of some indicators such as the association or co-occurrence of the two entities in the aspects of knowledge graph, search session history, preset corpus and the like (for example, whether there is direct correlation between the two entities in the knowledge graph, or co-occurrence information in the search session history, etc.)

In some alternative implementations of the present embodiment, if the feature vector includes a feature value for indicating the degree of correlation between the first entity eq and the second entity ec, these feature values may include at least one of the following: the degree of correlation of the first entity eq and the second entity ec in the triplet $(u,e_q,e_c)$ in a preset knowledge graph; the degree of co-occurrence of the first entity eq and the second entity ec in the triplet $(u,e_q,e_c)$ in a search session history; the degree of co-occurrence of the first entity eq and the second entity ec in the triplet $(u,e_q,e_c)$ in a preset corpus; and a subject similarity between the first entity eq and the second entity ec in the triplet $(u,e_q,e_c)$.

In some application scenarios, the feature value of the degree of correlation of the first entity eq and the second entity ec in the triplet $(u,e_q,e_c)$ in the preset knowledge graph may be determined by the following formula (7):

$$P(e_c \mid e_q) = \begin{cases} 1 & \textit{if there if a connection between } e_c \textit{ and } e_q \textit{ in a preset knowledge graph} \\ 0 & \textit{others} \end{cases}$$

$$(7)$$

Here, there is a connection between the first entity eq and the second entity ec in the preset knowledge graph may be understood as, there is a connecting line between the first entity eq and the second entity ec in the preset knowledge graph. Still taking the knowledge graph as shown in Fig. 3 as an example, there is a connecting line between the entity "mammal" and the entity "whale" in the knowledge graph. Therefore, if two entities correspond to the first entity eq and the second entity ec in the triplet $(u,e_q,e_c)$ respectively, the feature value of the degree of correlation of the two entities may be determined as 1 according to the formula (7). In contrast, there is no connecting line between the entity "mammal" and the entity "fish" in the knowledge graph shown in Fig. 3. Therefore, if two entities correspond to the first entity eq and the second entity ec in the triplet respectively, the feature value of the degree of correlation of the two entities may be determined as o according to the formula (7).

In some application scenarios, the feature value of the degree of co-occurrence of the first entity eq and the second entity ec in the triplet $(u,e_q,e_c)$ in the search session history may be determined by adopting the above formula (2). It may be understood that, when formula (2) is used to determine the degree of co-occurrence of the first entity eq and the second entity ec in the triplet $(u,e_q,e_c)$ in the search session history, the set to which ec' in the formula (2) belongs should also correspond to the candidate entity set determined in step 510.

In some application scenarios, the feature value of the degree of co-occurrence of the first entity eq and the second entity ec in the triplet $(u,e_q,e_c)$ in the preset corpus may be determined by the above formula (1).

In some application scenarios, the feature value of the subject similarity of the first entity eq and the second entity ec in the triplet $(u,e_q,e_c)$ may be determined by the following formula (8).

$$sim_c(e_q, e_c) = \cos(v_{d_{eq}}, v_{d_{ec}}) = \frac{(v_{d_{eq}})^T v_{d_{ec}}}{\| v_{d_{eq}} \| \| v_{d_{ec}} \|} \tag{8}$$

Here, $v_{d_{eq}}$ and $v_{d_{ec}}$ are respectively the subject feature vectors of the network document deq containing the first entity eq and the network document dec containing the second entity ec in a preset network document collection. In some application scenarios, latent dirichlet allocation (LDA) may be used to model network documents. For example, a LDA model may be pre-trained to characterize the subject feature vectors of the network documents in the network document collection. In this way, the cosine similarity between the subject feature vectors of the network document deq containing the first entity eq and the network document dec containing the second entity ec may be used as the feature value to measure the subject similarity between the first entity eq and the second entity ec in the triplet $(u, e_q, e_c)$.

In some alternative implementations of the present embodiment, if the feature vector includes the feature value for indicating the degree of interest of the user u of the triplet in the second entity ec in the triplet $(u, e_q, e_c)$, these feature values may include at least one of the following: a click rate of the second entity ec in the triplet $(u, e_q, e_c)$; a click rate of a subject category to which the second entity ec belongs in a preset classification table; and a semantic similarity between the first entity eq and the second entity ec in the triplet $(u, e_q, e_c)$.

In some application scenarios, the feature value of the click rate of the second entity ec in the triplet $(u, e_q, e_c)$ may be determined by at least one of the following formula (9) to formula (11):

$$CTR(u, e_q, e_c) = \frac{click(u, e_q, e_c) + \alpha}{impression(u, e_q, e_c) + \alpha + \beta} \tag{9}$$

$$CTR(e_q, e_c) = \frac{click(e_q, e_c) + \alpha}{impression(e_q, e_c) + \alpha + \beta} \tag{10}$$

$$CTR(e_c) = \frac{click(e_c) + \alpha}{impression(e_c) + \alpha + \beta} \tag{11}$$

In the above formula (9) to formula (11), the click($\cdot$) function may be the number of clicks on the second entity ec in various cases. Specifically, $click(u, e_q, e_c)$ may be the number of clicks on the second entity ec in the search engine results page obtained by the user u in searching the first entity eq; $click(e_q, e_c)$ may be the number of clicks on the second entity ec in the search engine results page obtained by all users in searching the first entity eq; and $click(e_c)$ may be the number of clicks on the second entity ec in the search engine results page obtained by all users in searching any entity.

The impression($\cdot$) function may be the number of times of presentation of the second entity ec in various cases. For example, the number of times the second entity ec being presented in the browser window of the search engine results page in various cases. $impression(u, e_q, e_c)$ may be the number of times the second entity ec being presented in the search engine results page obtained by the user u in searching the first entity eq; $impression(e_q, e_c)$ may be the number of times the second entity ec being presented in the search engine results page obtained by all users in searching the first entity eq; and $impression(e_c)$ may be the number of times the second entity ec being presented in the search engine results page obtained by all users in searching any entity.

In addition, in the above formula (9) to formula (11), $\alpha$ and $\beta$ may be preset constants to obtain smooth click rate data. By properly setting $\alpha$ and $\beta$, the second entity ec with few clicks and few presentation times may obtain a stable click rate value.

It may be understood that, in the search result obtained by searching the first entity eq in the triplet $(u, e_q, e_c)$, if the feature value of the click rate of the second entity ec in the triplet $(u, e_q, e_c)$ is determined by the above three formula (9) to formula (11), then, the feature vector of the sample ultimately obtained will have three feature values of the click rate calculated by the formula (9) to formula (11), respectively.

In some application scenarios, in the search result obtained by searching the first entity eq in the triplet $(u, e_q, e_c)$,

the feature value of the click rate of a subject category to which the second entity ec belongs in a preset classification table may be determined by at least one of the following formula (12) to formula (14):

$$CTR_t(u,e_q,e_c) = \frac{\sum\limits_{T_q \in cat(e_q)} \sum\limits_{T_c \in cat(e_c)} click_t(u,T_q,T_c) + \alpha}{\sum\limits_{T_q \in cat(e_q)} \sum\limits_{T_c \in cat(e_c)} impression_t(u,T_q,T_c) + \alpha + \beta}$$ (12)

$$CTR_t(e_q,e_c) = \frac{\sum\limits_{T_q \in cat(e_q)} \sum\limits_{T_c \in cat(e_c)} click_t(T_q,T_c) + \alpha}{\sum\limits_{T_q \in cat(e_q)} \sum\limits_{T_c \in cat(e_c)} impression_t(T_q,T_c) + \alpha + \beta}$$ (13)

$$CTR_t(e_c) = \frac{\sum\limits_{T_q \in cat(e_q)} \sum\limits_{T_c \in cat(e_c)} click_t(T_c) + \alpha}{\sum\limits_{T_q \in cat(e_q)} \sum\limits_{T_c \in cat(e_c)} impression_t(T_c) + \alpha + \beta}$$ (14)

Here, Tq is the subject collection to which the first entity eq belongs, and Tc is the subject collection to which the second entity ec belongs.

It may be understood that if the feature value of the click rate of the subject category to which the second entity ec belongs in the preset classification table is determined by the above three formula (12) to formula (14), the feature vector of the sample ultimately obtained will have three feature values of the click rate calculated by the formula (12) to formula (14), respectively.

In some application scenarios, the feature value of the semantic similarity of the first entity eq and the second entity ec in the triplet $(u,e_q,e_c)$ may be determined by the following formula (15):

$$sim_s(e_q,e_c) = \cos(v(s_q),v(s_c)) = \frac{v(s_q)^T v(s_c)}{\|v(s_q)\| \ \|v(s_c)\|}$$ (15)

In these application scenarios, each word in the description sentence s describing a entity eq may be first mapped to a word vector through a word embedding matrix. Then, the description sentence may be ultimately represented as a semantic vector through the convolutional neural network and a pooling operation. In this way, $v(s_q)$ and $v(s_c)$ in formula (15) above may be understood as the semantic vector of the first entity eq and the semantic vector of the second entity ec. Accordingly, the feature values of the semantic similarity of the first entity and the second entity may be understood as the cosine similarity between the semantic vector of the first entity eq and the semantic vector of the second entity ec.

In some alternative implementations of the present embodiment, if the feature vector contains the feature value for indicating the degree of expectation of the user of the triplet $(u,e_q,e_c)$ for the second entity ec in the triplet $(u,e_q,e_c)$, the feature values may include at least one of the following: a familiarity of relationship of the user and/or the first entity to the second entity determined based on historical click data of the user in the triplet $(u,e_q,e_c)$; a degree of surprise of the second entity ec relative to the user u and/or the first entity eq in the triplet $(u,e_q,e_c)$; and a click diversity of the first entity eq in the triplet $(u,e_q,e_c)$.

It may be understood that if a second entity ec has been found by the user u searching the first entity eq, then, when the user searches the first entity eq again, the familiarity of the user u to the second entity ec will be higher if the second entity ec is recommended to the user u. That is to say, the unpredictability of the user u to the second entity ec will be lower.

In some application scenarios, if the feature vector contains the feature value for indicating the familiarity of relationship of the user u and/or the first entity eq to the second entity ec determined based on the historical click data of the user in the triplet $(u, e_q, e_c)$, the feature value may be determined by at least one of the following formula (16) to formula (17):

$$R_a(u, e_q, e_c) = \begin{cases} 1 & if\ e_c \in \mathcal{E}(u, e_q) \\ 0 & others \end{cases} \tag{16}$$

$$R_a(e_q, e_c) = \begin{cases} 1 & if\ e_c \in \mathcal{E}_w(e_q) \\ 0 & others \end{cases} \tag{17}$$

Here, $\mathcal{E}(u, e_q) = \mathcal{E}_{ct}(u, e_q) \cup \mathcal{E}_{ce}(u, e_q)$, $\mathcal{E}_{ct}(u, e_q)$ is all the entities in the titles of the web documents clicked by the user u obtained from a search click log, and $\mathcal{E}_{ce}(u, e_q)$ is all entities clicked by the user u acquired from the entity click log.

$$\mathcal{E}_w(e_q) = \{e_c \in \mathcal{R}(e_q) : click_u(e_q, e_c) \ge N_u\}$$

In addition, in formula (17), $\quad$. Here, $click_u(e_q, e_c)$ is the number of users who have clicked on the second entity ec presented on the search engine results page when searching the first entity eq; and Nu is the preset threshold used to characterize the familiarity of most users to the relationship between the first entity eq and the second entity ec.

It may be understood that, if the feature value of the familiarity of relationship determined based on the historical click data of the user in the triplet $(u, e_q, e_c)$ is determined by the above formula (16) to formula (17), in the feature vector of the sample ultimately obtained, there are three feature values of the familiarity of relationship calculated from the formula (16) to formula (17), respectively.

In some alternative implementations of the present embodiment, if the feature vector includes the feature value for indicating the degree of surprise of the second entity ec relative to the user u and/or the first entity eq in the triplet $(u, e_q, e_c)$, these feature vector may be determined by at least one of the following formula (18) to formula (21):

$$dis(e_c, \mathcal{E}(u, e_q)) = \min_{e_k \in \mathcal{E}(u, e_q)} d(e_c, e_k) \tag{18}$$

$$dis_a(e_c, \mathcal{E}(u, e_q)) = \sum_{e_j \in \mathcal{E}(u, e_q)} \overline{CTR}(u, e_q, e_j) \cdot d(e_j, e_c) \tag{19}$$

$$dis(e_c, \mathcal{E}_w(e_q)) = \min_{e_k \in \mathcal{E}_w(e_q)} d(e_c, e_k) \tag{20}$$

$$dis_a(e_c, \mathcal{E}_w(e_q)) = \sum_{e_j \in \mathcal{E}_w(e_q)} \overline{CTR}(e_q, e_j) \cdot d(e_j, e_c) \tag{21}$$

Here, in the above formula (18), $\mathcal{E}_{ct}(u, e_q)$ is a set of entities known to the user u in association with the first entity eq, d(•) may be a function for measuring the distance between the second entity ec and an element in the set $\mathcal{E}_{ct}(u, e_q)$. Schematically, d(ec,ek)=1-simc(ec,ek), and simc(ec,ek) may be obtained by using the above formula (8). By obtaining the minimum value of the distance between the second entity ec and each element in the set, the degree of surprise of the second entity ec relative to the first entity eq may be measured.

However, measuring the degree of surprise of the second entity ec relative to the first entity eq only by formula (18) and/or formula (20) is likely to result in that the second entity ec is an entity completely uninterested to the user u and completely unrelated to the user u. To solve this problem, the degree of interest of the user u may be taken into account by the above formula (19) and/or formula (21).

Specifically, in formula (19), $\overline{CTR}(u,e_q,e_j)$ is the normalized $CTR(u,e_q,e_j)$ and satisfies:

$$\sum_{e_j \in \mathcal{R}(e_q)} \overline{CTR}(u, e_q, e_j) = 1$$

$CTR(u,e_q,e_j)$ may be calculated by referring to the above formula (9).

Further, $\overline{CTR}(e_q,e_j)$ in the above formula (21) is the normalized $CTR(e_q,e_j)$ and satisfies:

$$\sum_{e_j \in \mathcal{R}(e_q)} \overline{CTR}(e_q, e_j) = 1$$

It may be understood that, if the feature value of the degree of surprise of the second entity ec relative to the user u and/or the first entity eq in the triplet $(u,e_q,e_c)$ is determined respectively by the above formula (18) to formula (21), in the feature vector of the sample ultimately obtained, there are feature values of the degree of surprise of the second entity ec relative to the first entity eq determined by the formula (18) to formula (21), respectively.

In some alternative implementations of the present embodiment, if the feature vector includes the feature value for indicating the click diversity of the first entity eq in the triplet $(u,e_q,e_c)$, the feature value may be determined by the following formula (22):

$$\mathrm{div}(e_q) = Clickentroy(e_q) = \sum_{e_i \in C(e_q)} -P(e_i | e_q) \log_2 P(e_i | e_q) \qquad (22)$$

Here:

$$P(e_i | e_q) = \frac{click(e_q, e_i)}{\sum_{e_j \in C(e_q)} click(e_q, e_j)}$$

C(eq) is a set of clicked entities in the search results obtained in searching the first entity eq.

The feature value of the click diversity determined by the above formula (22) may intuitively reflect the click diversity of the search result obtained in searching the first entity eq.

It may be understood that, in step 522, when the ranldng model obtained by training ranks, the more feature values are selected, the more the corresponding influencing factors affecting the ranking result, and the candidate entity sequence obtained by the ranking model will also meet the needs of the user such as the degree of interest, the degree of expectation and the degree of correlation between entities more appropriately.

Step 523, inputting the training sample set and the generated feature vector into a pre-established gradient boosting decision tree model, and training the gradient boosting decision tree model based on a stochastic gradient descent algorithm.

Here, the gradient boosting decision tree model may be, for example, a stochastic Gradient Boosting Decision Tree (stochastic GBDT) model. It should be noted that by adjusting parameters such as the number of trees, the number of nodes, the learning rate, and the sampling rate in the stochastic GBDT model, the trained model may achieve an optimal effect.

Step 524, generating the ranking model, in response to a minimum cross-entropy loss function.

Here, the cross-entropy loss function Loss(H) may have the following expression form of formula (23):

$$Loss(\mathscr{H}) = -\log \prod_{(<u^i,e_q^j,e_c^k>,y_{ijk})\in\mathscr{H}} f(u^i,e_q^j,e_c^k)^{y_{ijk}} g(1-f(u^i,e_q^j,e_c^k))^{1-y_{ijk}}$$

$$= -\prod_{(<u^i,e_q^j,e_c^k>,y_{ijk})\in\mathscr{H}} y_{ijk} g\log f(u^i,e_q^j,e_c^k) + (1-y_{ijk}) g\log(1-f(u^i,e_q^j,e_c^k))$$

$$(23)$$

By training the stochastic gradient boosting decision tree model, the model corresponding to the minimum value of the cross entropy loss function Loss(H) may be determined as the ranking model ultimately obtained.

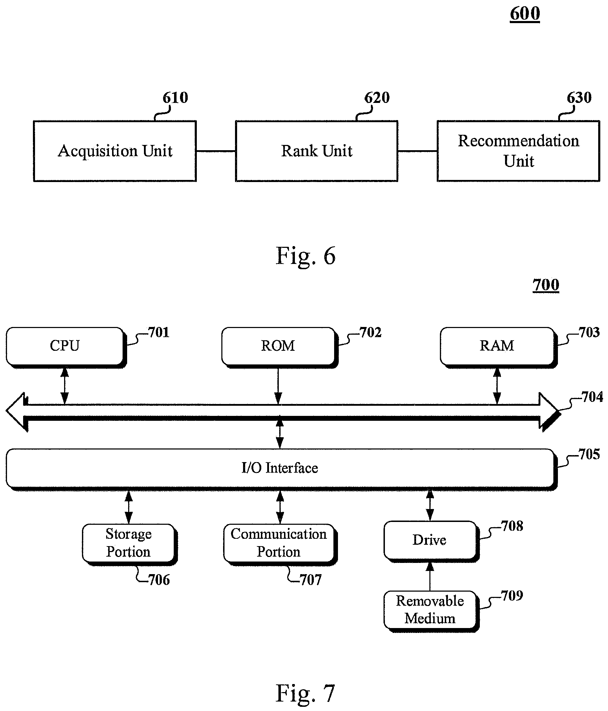

With further reference to Fig. 6, as an implementation to the method shown in the above figures, the present disclosure provides an embodiment of an apparatus for recommending entity. The apparatus embodiment corresponds to the method embodiment shown in Fig. 2, and the apparatus may specifically be applied to various electronic devices.

As shown in Fig. 6, the apparatus for recommending entity of the present embodiment may include an acquisition unit 610, a rank unit 620 and a recommendation unit 630.

The acquisition unit 610 may be configured to acquire a candidate entity set associated with a to-be-searched entity, in response to receiving a user's search request for an entity.

The rank unit 620 may be configured to input the candidate entity set into a pre-trained ranking model to obtain a candidate entity sequence.

The recommendation unit 630 may be configured to select a candidate entity from the candidate entity sequence and recommend the selected candidate entity to the user.

In the present embodiment, the ranking model may rank the candidate entity set based on at least one of: a degree of correlation between each candidate entity in the candidate entity set and the to-be-searched entity; a degree of interest of the user in the each candidate entity in the candidate entity set; and a degree of expectation of the user for the each candidate entity in the candidate entity set.

In some alternative implementations, when acquiring a candidate entity set associated with a to-be-searched entity, the acquisition unit 610 may be further configured to: add a candidate entity to the candidate entity set, in response to an existence of an association between the candidate entity and the to-be-searched entity in a preset knowledge graph.

In some alternative implementations, when acquiring a candidate entity set associated with a to-be-searched entity, the acquisition unit 610 may be further configured to: add a candidate entity to the candidate entity set, in response to a number of co-occurrences of the candidate entity and the to-be-searched entity in a search session history exceeding a preset first threshold.

In some alternative implementations, when acquiring a candidate entity set associated with a to-be-searched entity, the acquisition unit 610 may be further configured to: determine an entity having a co-occurrence relationship with the to-be-searched entity in a preset corpus as a co-occurrence candidate entity; and add a co-occurrence candidate entity having a degree of correlation with the to-be-searched entity exceeding a preset second threshold to the candidate entity set.

In some alternative implementations, the apparatus for recommending entity of the present embodiment may further include a training unit (not shown in the figures). The training unit may be configured to train the ranking model.

In these alternative implementations, the training unit may include: a training sample generation module, configured to generate a training sample set, each training sample in the training sample set including a triplet and a click behavior tag, the triplet including a user identification, a first entity, and a second entity, and the click behavior tag being used to indicate whether the user clicked on the second entity in a search result obtained by searching the first entity; a feature vector generation module, configured to generate a feature vector of a training sample, for each training sample in the generated training sample set; an iteration training module, configured to input the training sample set and the generated feature vector into a pre-established gradient boosting decision tree model, and train the gradient boosting decision tree model based on a stochastic gradient descent algorithm; and a generation unit, configured to generate the ranking model, in response to a minimum cross-entropy loss function. Here, the feature vector includes a feature value for indicating at least one of: a degree of correlation between the first entity and the second entity in the triplet; a degree of interest of the user of the triplet in the second entity in the triplet; and a degree of expectation of the user of the triplet for the second entity in the triplet.

In some alternative implementations, a component for indicating the degree of correlation between the first entity and the second entity in the triplet includes at least one of: a degree of correlation of the first entity and the second entity in the triplet in a preset knowledge graph; a degree of co-occurrence of the first entity and the second entity in the triplet in a search session history; a degree of co-occurrence of the first entity and the second entity in the triplet in a preset corpus; and a subject similarity between the first entity and the second entity in the triplet.

In some alternative implementations, the feature value for indicating the degree of interest of the user of the triplet in the second entity in the triplet includes at least one of: a click rate of the second entity in the triplet; a click rate of a subject category to which the second entity belongs in a preset classification table; and a semantic similarity between the first entity and the second entity in the triplet.

In some alternative implementations, the feature value for indicating the degree of expectation of the user of the triplet for the second entity in the triplet includes at least one of: a familiarity of relationship of the user and/or the first entity to the second entity determined based on historical click data of the user in the triplet; a degree of surprise of the second entity relative to the user and/or the first entity in the triplet; and a click diversity of the first entity in the triplet.

Referring to Fig. 7, a schematic structural diagram of a computer system 700 adapted to execute a server of the embodiments of the present application is shown. The server shown in Fig. 7 is only an illustration, and does not limit the function and use of the embodiments of the present application.

As shown in Fig. 7, the computer system 700 includes a central processing unit (CPU) 701, which may execute various appropriate actions and processes in accordance with a program stored in a read-only memory (ROM) 702 or a program loaded into a random access memory (RAM) 703 from a storage portion 708. The RAM 703 also stores various programs and data required by operations of the system 700. The CPU 701, the ROM 702 and the RAM 703 are connected to each other through a bus 704. An input/output (I/O) interface 705 is also connected to the bus 704.

The following components are connected to the I/O interface 705: a storage portion 706 including a hard disk and the like; and a communication portion 707 including a network interface card, such as a LAN card and a modem. The communication portion 707 performs communication processes via a network, such as the Internet. A drive 708 is also connected to the I/O interface 705 as required. A removable medium 709, such as a magnetic disk, an optical disk, a magneto-optical disk, and a semiconductor memory, may be installed on the drive 708, to facilitate the retrieval of a computer program from the removable medium 709, and the installation thereof on the storage portion 706 as needed.

In particular, according to embodiments of the present disclosure, the process described above with reference to the flow chart may be executed in a computer software program. For example, an embodiment of the present disclosure includes a computer program product, which includes a computer program that is tangibly embedded in a machine-readable medium. The computer program includes program codes for executing the method as illustrated in the flow chart. In such an embodiment, the computer program may be downloaded and installed from a network via the communication portion 707, and/or may be installed from the removable media 709. The computer program, when executed by the central processing unit (CPU) 701, executes the above mentioned functionalities as defined by the methods of the present disclosure. It should be noted that the computer readable medium in the present disclosure may be computer readable storage medium. An example of the computer readable storage medium may include, but not limited to: semiconductor systems, apparatus, elements, or a combination any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In the present disclosure, the computer readable storage medium may be any physical medium containing or storing programs which can be used by a command execution system, apparatus or element or incorporated thereto. The computer readable medium may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

A computer program code for executing operations in the disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider).

The flow charts and block diagrams in the accompanying drawings illustrate architectures, functions and operations that may be executed according to the systems, methods and computer program products of the various embodiments of the present disclosure. In this regard, each of the blocks in the flow charts or block diagrams may represent a module, a program segment, or a code portion, said module, program segment, or code portion including one or more executable instructions for executing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be executed using a dedicated hardware-based system executing specified functions or operations, or by a combination of a dedicated hardware and computer instructions.

The units or modules involved in the embodiments of the present application may be executed by means of software or hardware. The described units or modules may also be provided in a processor, for example, described as: a processor, including an acquisition unit, a rank unit and a recommendation unit, where the names of these units or modules do not in some cases constitute a limitation to such units or modules themselves. For example, the acquisition unit may also be described as "a unit for acquiring a candidate entity set associated with a to-be-searched entity, in response to receiving a user's search request for the entity."

In another aspect, the present application further provides a non-transitory computer-readable storage medium. The non-transitory computer-readable storage medium may be the non-transitory computer-readable storage medium included in the apparatus in the above described embodiments, or a stand-alone non-transitory computer-readable storage medium not assembled into the apparatus. The non-transitory computer-readable storage medium stores one or more programs. The one or more programs, when executed by a device, cause the device to: acquire a candidate entity set associated with a to-be-searched entity, in response to receiving a user's search request for the entity; input the candidate entity set into a pre-trained ranking model to obtain a candidate entity sequence; and select a candidate entity from the candidate entity sequence and recommend the selected candidate entity to the user, wherein, the ranking model ranks the candidate entity set based on at least one of: a degree of correlation between each candidate entity in the candidate entity set and the to-be-searched entity; a degree of interest of the user in the each candidate entity in the candidate entity set; and a degree of expectation of the user for the each candidate entity in the candidate entity set.

The above description only provides an explanation of the preferred embodiments of the present application and the technical principles used. It should be appreciated by those skilled in the art that the inventive scope of the present application is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present application are examples.

**Claims**

1. A method for recommending entity, **characterized in that** the method comprises:

   acquiring a candidate entity set associated with a to-be-searched entity, in response to receiving a user's search request for the entity;
   inputting the candidate entity set into a pre-trained ranking model to obtain a candidate entity sequence; and
   selecting a candidate entity from the candidate entity sequence and recommending the selected candidate entity to the user,
   wherein, the ranking model ranks the candidate entity set based on at least one of:

   a degree of correlation between each candidate entity in the candidate entity set and the to-be-searched entity;
   a degree of interest of the user in the each candidate entity in the candidate entity set; and
   a degree of expectation of the user for the each candidate entity in the candidate entity set.

2. The method according to claim 1, **characterized in that** the acquiring a candidate entity set associated with a to-be-searched entity further comprises:
   adding a candidate entity to the candidate entity set, in response to an existence of an association between the candidate entity and the to-be-searched entity in a preset knowledge graph.

3. The method according to claim 1 or 2, **characterized in that** the acquiring a candidate entity set associated with a to-be-searched entity further comprises:
   adding a candidate entity to the candidate entity set, in response to a number of co-occurrences of the candidate entity and the to-be-searched entity in a search session history exceeding a preset first threshold.

4. The method according to claim 3, **characterized in that** the acquiring a candidate entity set associated with a to-be-searched entity further comprises:

determining an entity having a co-occurrence relationship with the to-be-searched entity in a preset corpus as a co-occurrence candidate entity; and

adding a co-occurrence candidate entity having a degree of correlation with the to-be-searched entity exceeding a preset second threshold to the candidate entity set.

5. The method according to one of the preceding claims, **characterized in that** the ranking model is obtained by training through following steps:

generating a training sample set, each training sample in the training sample set comprising a triplet and a click behavior tag, the triplet comprising a user identification,

a first entity, and a second entity, and the click behavior tag being used to indicate whether the user clicked on the second entity in a search result obtained by searching the first entity;

generating a feature vector of a training sample, for each training sample in the generated training sample set;

inputting the training sample set and the generated feature vector into a pre-established gradient boosting decision tree model, and training the gradient boosting decision tree model based on a stochastic gradient descent algorithm; and

generating the ranking model, in response to a minimum cross-entropy loss function, wherein, the feature vector comprises a feature value for indicating at least one of:

a degree of correlation between the first entity and the second entity in the triplet;

a degree of interest of the user of the triplet in the second entity in the triplet; and

a degree of expectation of the user of the triplet for the second entity in the triplet.

6. The method according to claim 5, **characterized in that** a component for indicating the degree of correlation between the first entity and the second entity in the triplet comprises at least one of:

a degree of correlation of the first entity and the second entity in the triplet in a preset knowledge graph;

a degree of co-occurrence of the first entity and the second entity in the triplet in a search session history;

a degree of co-occurrence of the first entity and the second entity in the triplet in a preset corpus; and

a subject similarity between the first entity and the second entity in the triplet.

7. The method according to claim 5 or 6, **characterized in that** the feature value for indicating the degree of interest of the user of the triplet in the second entity in the triplet comprises at least one of:

a click rate of the second entity in the triplet;

a click rate of a subject category to which the second entity belongs in a preset classification table; and

a semantic similarity between the first entity and the second entity in the triplet.

8. The method according to one of claims 5 to 7, **characterized in that** the feature value for indicating the degree of expectation of the user of the triplet for the second entity in the triplet comprises at least one of:

a familiarity of relationship of the user and/or the first entity to the second entity determined based on historical click data of the user in the triplet;

a degree of surprise of the second entity relative to the user and/or the first entity in the triplet; and

a click diversity of the first entity in the triplet.

9. An apparatus for recommending entity, **characterized in that** the apparatus comprises:

an acquisition unit, configured to acquire a candidate entity set associated with a to-be-searched entity, in response to receiving a user's search request for an entity;

a rank unit, configured to input the candidate entity set into a pre-trained ranking model to obtain a candidate entity sequence; and

a recommendation unit, configured to select a candidate entity from the candidate entity sequence and recommend the selected candidate entity to the user, wherein, the ranking model ranks the candidate entity set based on at least one of:

a degree of correlation between each candidate entity in the candidate entity set and the to-be-searched entity;

a degree of interest of the user in the each candidate entity in the candidate entity set; and
a degree of expectation of the user for the each candidate entity in the candidate entity set.

10. The apparatus according to claim 9, **characterized in that** when acquiring a candidate entity set associated with a to-be-searched entity, the acquisition unit is further configured to:
add a candidate entity to the candidate entity set, in response to the candidate entity and the to-be-searched entity existing in an identical preset knowledge graph.

11. The apparatus according to claim 9 or 10, **characterized in that** when acquiring a candidate entity set associated with a to-be-searched entity, the acquisition unit is further configured to:
add a candidate entity to the candidate entity set, in response to a number of co-occurrences of the candidate entity and the to-be-searched entity in a search session history exceeding a preset first threshold.

12. The apparatus according to claim 11, **characterized in that** when acquiring a candidate entity set associated with a to-be-searched entity, the acquisition unit is further configured to:

determine an entity having a co-occurrence relationship with the to-be-searched entity in a preset corpus as a co-occurrence candidate entity; and
add a co-occurrence candidate entity having a degree of correlation with the to-be-searched entity exceeding a preset second threshold to the candidate entity set.

13. The apparatus according to one of claims 9 to 12, **characterized in that** the apparatus further comprises a training unit, the training unit is configured to train the ranking model;
the training unit comprises:

a training sample generation module, configured to generate a training sample set, each training sample in the training sample set comprising a triplet and a click behavior tag, the triplet comprising a user identification, a first entity, and a second entity, and the click behavior tag being used to indicate whether the user clicked on the second entity in a search result obtained by searching the first entity;
a feature vector generation module, configured to generate a feature vector of a training sample, for each training sample in the generated training sample set;
an iteration training module, configured to input the training sample set and the generated feature vector into a pre-established gradient boosting decision tree model, and train the gradient boosting decision tree model based on a stochastic gradient descent algorithm; and
a generation unit, configured to generate the ranking model, in response to a minimum cross-entropy loss function,
wherein, the feature vector comprises a feature value for indicating at least one of:

a degree of correlation between the first entity and the second entity in the triplet;
a degree of interest of the user of the triplet in the second entity in the triplet; and
a degree of expectation of the user of the triplet for the second entity in the triplet, preferably a component for indicating the degree of correlation between the first entity and the second entity in the triplet comprises at least one of:

a degree of correlation of the first entity and the second entity in the triplet in a preset knowledge graph;
a degree of co-occurrence of the first entity and the second entity in the triplet in a search session history;
a degree of co-occurrence of the first entity and the second entity in the triplet in a preset corpus; and
a subject similarity between the first entity and the second entity in the triplet,

preferably the feature value for indicating the degree of interest of the user of the triplet in the second entity in the triplet comprises at least one of:

a click rate of the second entity in the triplet;
a click rate of a subject category to which the second entity belongs in a preset classification table; and
a semantic similarity between the first entity and the second entity in the triplet, preferably the feature value for indicating the degree of expectation of the user of the triplet for the second entity in the triplet comprises at least one of:

a familiarity of relationship of the user and/or the first entity to the second entity determined based on historical click data of the user in the triplet;

a degree of surprise of the second entity relative to the user and/or the first entity in the triplet; and

a click diversity of the first entity in the triplet.

14. A device, **characterized in that** the device comprises:

one or more processors; and

a storage apparatus, to store one or more programs, and

when the one or more programs being executed by the one or more processors, cause the one or more processors to execute a method described by any one of claims 1 to 8.

15. A computer readable storage medium, **characterized in that** the storage medium stores a computer program thereon, the computer program, when executed by a processor, executes a method described by any one of claims 1 to 8.

<u>100</u>

103

102

101

104

105

Fig. 1

**200**

| acquiring a candidate entity set associated with a to-be-searched entity, in response to receiving a user's search request for the entity | 210 |

| inputting the candidate entity set into a pre-trained ranking model to obtain a candidate entity sequence | 220 |

| selecting a candidate entity from the candidate entity sequence and recommending the selected candidate entity to the user | 230 |

Fig. 2

Fig. 3

400

401

acquire a candidate entity set associated with a to-be-searched entity

402

database

search request for the entity

403

input the candidate entity set into a pre-trained ranking model to obtain a candidate entity sequence

404

select the candidate entity and recommend

candidate entity sequence

410

Fig. 4

**500**

training
sample set — 521

feature vector of a
training sample — 522

gradient
boosting
decision tree — 523

N

minimum
cross-entropy loss
function? — 524

Y

acquiring a candidate entity set associated
with a to-be-searched entity, in response to
receiving a user's search request for the
entity — 510

inputting the candidate entity set into a pre-
trained ranking model to obtain a candidate
entity sequence — 520

selecting a candidate entity from the
candidate entity sequence and recommending
the selected candidate entity to the user — 530

Fig. 5

**600**

| | | | | | |
|---|---|---|---|---|---|
| 610 | | 620 | | 630 | |

Acquisition Unit — Rank Unit — Recommendation Unit

## Fig. 6

**700**

CPU — 701   ROM — 702   RAM — 703

— 704

I/O Interface — 705

Storage Portion — 706   Communication Portion — 707   Drive — 708

Removable Medium — 709

## Fig. 7

Europäisches
Patentamt

European
Patent Office

Office européen
des brevets

# EUROPEAN SEARCH REPORT

**Application Number**

EP 18 18 2822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 183 499 B1 (KRIVOKON IGOR [US] ET AL) 10 November 2015 (2015-11-10) * the whole document * | 1-15 | INV. H04L29/06 |
| X | US 9 619 571 B2 (QBASE LLC [US]) 11 April 2017 (2017-04-11) * the whole document * | 1-15 | |
| X | US 2017/178023 A1 (GREEN BRADLEY RAY [US] ET AL) 22 June 2017 (2017-06-22) * the whole document * | 1-15 | |

**TECHNICAL FIELDS SEARCHED (IPC)**

G06F
H04L

The present search report has been drawn up for all claims

| Place of search | Date of completion of the search | Examiner |
|---|---|---|
| Munich | 18 December 2018 | May, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 18 2822

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2018

| Patent document cited in search report | | Publication date | Patent family member(s) | | Publication date |
|---|---|---|---|---|---|
| US 9183499 | B1 | 10-11-2015 | NONE | | |
| US 9619571 | B2 | 11-04-2017 | US | 2015154306 A1 | 04-06-2015 |
| | | | US | 2017212899 A1 | 27-07-2017 |
| US 2017178023 | A1 | 22-06-2017 | NONE | | |

EPO FORM P0459

For more details about this annex : see Official Journal of the European Patent Office, No. 12/82

**EP 3 554 040 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810317390